# EUROPEAN PATENT APPLICATION

(11) **EP 3 795 599 A1**
(43) Date of publication of application: **24.03.2021**
(21) Application number: 19802837.5
(22) Date of filing: 14.05.2019
(51) Int. Cl.: C08F 290/06, B32B 27/00, C08F 2/44, C08F 2/46, C09J 4/02, C09J 175/04, C09J 175/16

(54) **PHOTOCURABLE RESIN COMPOSITION AND ADHESIVE USING THIS**

(30) Priority: 16.05.2018 JP 2018094407
(71) Applicant: Ube Industries, Ltd., Yamaguchi 755-8633 (JP)
(72) Inventor: TAKIGAWA, Shinya, Ichihara-shi, Chiba 290-0045 (JP); WATANABE, Hideaki, Ichihara-shi, Chiba 290-0045 (JP)
(74) Representative: Hoffmann Eitle
(86) International application number: PCT/JP2019/019147
(87) International publication number: WO 2019/221126

(57) **Abstract**

This photocurable resin composition contains a polymer cross-linked material (A) and a polymeric material (B), wherein the polymer cross-linked material (A) contains urethane(meth)acrylate, and the polymeric material (B) contains a polyurethane resin that includes a structure derived from polycarbonate polyols and that does not have an acrylic group. This photocurable resin composition has excellent high-temperature adhesion. The urethane(meth)acrylate in the polymer cross-linked material (A) preferably includes a structure derived from polycarbonate polyols.

## Description

### Technical Field

### (Cross reference of related application)

The present application claims a right of priority on the basis of Japanese Patent Application No. 2018-94407 filed on May 16, 2018 "Photocurable resin composition and adhesive comprising same." The content thereof is incorporated herein by reference in its entirety.

### (Technical Field)

The present invention relates to a photocurable resin composition and an adhesive comprising the same.

### Background Art

As pressure-sensitive adhesives/adhesives used in optical bonding, photocurable resin compositions which are cured by exposure to active energy rays such as UV rays and visible light rays have been conventionally used. For example, in Patent Literature 1, use of, for example, a polyurethane acrylate, and a polyisoprene-based acrylate, as pressure-sensitive adhesives/adhesives for a touch panel is described. Also, in Patent Literature 2, a pressure-sensitive adhesive film comprising a urethane acrylate pressure-sensitive adhesive made from polycarbonate polyol is described. In Patent Literature 3, as a pressure-sensitive adhesive, a pressure-sensitive adhesive comprising urethane acrylate made from polycarbonate diol is described.

### Citation List

### Patent Literature

Patent Literature 1: International Publication No. WO 2015/119245
Patent Literature 2: International Publication No. WO 2015/098307
Patent Literature 3: Japanese Patent Laid-Open No. 2014-189723

### Summary of Invention

### Technical Problem

In Patent Literature 1 to 3, however, adhesiveness between resin and glass exposed to high temperature is not particularly mentioned.

A photocurable resin composition having a specific structure and composition which satisfies the functions and properties required for a cured product of the photocurable resin composition such as excellent high-temperature adhesiveness has been therefore required.

In other words, an object of the present invention is to provide a photocurable resin composition which solves the problem and has excellent high-temperature adhesiveness, and an adhesive comprising the composition.

### Solution to Problems

A photocurable resin composition of the present invention comprises a polymeric crosslinking agent (A) and a polymeric material (B), wherein the polymeric crosslinking agent (A) comprises a urethane (meth)acrylate, and the polymeric material (B) comprises a polyurethane resin comprising a structure derived from a polycarbonate polyol, and having no acrylic group.

Aspects of the present invention are as follows.
[1] A photocurable resin composition comprising a polymeric crosslinking agent (A) and a polymeric material (B), wherein
   the polymeric crosslinking agent (A) comprises a urethane (meth)acrylate, and
   the polymeric material (B) comprises a polyurethane resin comprising a structure derived from a polycarbonate polyol, and having no acrylic group.
[2] The photocurable resin composition according to claim 1, wherein the urethane (meth)acrylate in the polymeric crosslinking agent (A) has a structure derived from a polycarbonate polyol.
[3] The photocurable resin composition according to item [1] or [2], wherein a mass ratio of the polymeric crosslinking agent (A) to the polymeric material (B) is (A):(B)= 5:95 to 95:5.
[4] The photocurable resin composition according to any one of items [1] to [3], wherein the urethane (meth)acrylate in the polymeric crosslinking agent (A) has a weight-average molecular weight of 5000 to 20000.
[5] The photocurable resin composition according to any one of items [1] to [4], wherein the polyurethane resin in the polymeric material (B) has a weight-average molecular weight of 6000 to 20000.
[6] The photocurable resin composition according to any one of items [1] to [5], further comprising a polymerizable compound (C) other than (A).
[7] The photocurable resin composition according to any one of items [1] to [6], which has a viscosity of 150 Pa·s or more at 25°C.
[8] A cured product produced by curing the photocurable resin composition according to any one of items [1] to [7] .
[9] An adhesive comprising the photocurable resin composition according to any one of items [1] to [7].
[10] A laminate having a layer comprising the adhesive according to item [9], and a layer composed of a glass substrate or a plastic substrate.

### Advantageous Effects of Invention

According to the present invention, a photocurable resin composition having excellent high-temperature adhesiveness can be obtained. Also, the photocurable resin composition can have high viscosity and therefore can be prevented from dripping when applied to a curved substrate.

### Description of Embodiments

Hereinafter, embodiments of the present invention will be described in detail. Incidentally, a resin composition containing polymer compounds as described in the present invention is obtained by a reaction of multiple types of raw material compounds to produce a product having many structures. Accordingly, for the polymer compound, many structures included therein can be described by general formulas; however, the polymer compound cannot be represented by these structure uniquely. Also, it is difficult to directly measure the physical properties thereof by, for example, instrumental analysis for identification or discrimination from existing compounds. Accordingly, the polymer compounds including "polymeric crosslinking agent (A)" may be identified by a production method on an as needed basis in the present invention.

### <<<Photocurable resin composition>>>

The photocurable resin composition of the present invention comprises a polymeric crosslinking agent (A) and a polymeric material (B), wherein the polymeric crosslinking agent (A) comprises a urethane (meth)acrylate, and the polymeric material (B) comprises a polyurethane resin comprising a structure derived from a polycarbonate polyol, and having no acrylic group.

Preferably, the polymeric crosslinking agent (A) is a urethane (meth)acrylate comprising a structure derived from a polycarbonate polyol, and having a (meth)acrylic group at an end.

The photocurable resin composition may further comprise, for example, a polymerizable compound (C) and/or a photopolymerization initiator (D), as optional components.

In the present invention, a "urethane (meth)acrylate," which is also referred to as a polyurethane (meth)acrylate, represents a urethane acrylate having a (meth)acrylic group at an end.

In the present invention, a "(meth)acrylic group" represents a group of atoms having at least one (meth)acrylic group, or a functional group of (meth)acrylic acid excluding a hydroxyl group, that is, represents an acrylic group or a methacrylic group.

### <<Polymeric crosslinking agent (A)>>

In the present invention, the polymeric crosslinking agent (A) comprises a urethane (meth)acrylate.

Preferably, the urethane (meth)acrylate has a structure derived from a polyol, a structure derived from a polyisocyanate, and a structure derived from a (meth)acrylate.

The polymeric crosslinking agent (A) may comprise multiple types of urethane (meth)acrylates, and may comprise at least one urethane (meth)acrylate selected from a urethane (meth)acrylate having a structure derived from a polycarbonate polyol and containing a (meth)acrylic group at an end (i.e., a polycarbonate-based urethane (meth)acrylate), a urethane (meth)acrylate having a structure derived from a polyether polyol and containing a (meth)acrylic group at an end (i.e., a polyether polyol-based urethane (meth)acrylate), or a urethane (meth)acrylate having a structure derived from a polyester polyol and containing a (meth)acrylic group at an end (i.e., a polyester polyol-based urethane (meth)acrylate). Preferably, the polymeric crosslinking agent (A) comprises a polycarbonate polyol-based urethane (meth)acrylate. Thereby, a photocurable resin composition having excellent high-temperature adhesiveness can be obtained, and the photocurable resin composition can have high viscosity.

In the polymeric crosslinking agent (A), the amount of the polycarbonate polyol-based urethane (meth)acrylate may be 50 mass% or more, 70 mass% or more, or 80 mass% or more, and 100 mass% or less, 95 mass% or less, or 90 mass% or less, based on the total of the polycarbonate polyol-based urethane (meth)acrylate, the polyether polyol-based urethane (meth)acrylate, and the polyester polyol-based urethane (meth)acrylate. Preferably, the amount of the polycarbonate polyol-based urethane (meth)acrylate is 100 mass%.

The urethane (meth)acrylate may include at least one structure derived from a polyol selected from the structure derived from a polycarbonate polyol, the structure derived from a polyether polyol, or the structure derived from a polyester polyol. Preferably, the urethane (meth)acrylate includes the structure derived from a polycarbonate polyol, containing a urethane (meth)acrylate having a (meth)acrylic group at an end (i.e., a polycarbonate polyol-based urethane (meth)acrylate). Thereby, a photocurable resin composition having high high-temperature adhesiveness can be obtained, and the photocurable resin composition can have high viscosity.

The urethane (meth)acrylate may comprise multiple types of polyols, and the amount of the structure derived from the polycarbonate polyol may be 50 mass% or more, 70 mass% or more, or 80 mass% or more, and 100 mass% or less, 95 mass% or less, or 90 mass% or less, based on the total of the structure derived from a polycarbonate polyol, the structure derived from a polyether polyol, and the structure derived from a polyester polyol. In the urethane (meth)acrylate, preferably either one of, more preferably both of, the structure derived from a polyether polyol and the structure derived from a polyester polyol are absent.

The polymeric crosslinking agent (A) may comprise another polymeric crosslinking agent other than urethane (meth)acrylates.

Examples of the other polymeric crosslinking agent include a polyester (meth)acrylate and an epoxy (meth)acrylate, of which skeleton such as a polyester, an epoxy and a urethane has two or more ethylenically unsaturated double bonds such as a (meth)acryloyl group and a vinyl group.

In the polymeric crosslinking agent (A), the lower limit of the amount of the polycarbonate polyol-based urethane (meth)acrylate is 20 mass%, preferably 30 mass%, more preferably 40 mass%, particularly 60 mass%, especially 90 mass%, based on the polymeric crosslinking agent (A) . The upper limit of the amount of the polycarbonate polyol-based urethane (meth)acrylate is 50 mass%, preferably 70 mass%, more preferably 80 mass%, particularly 90 mass%, especially 100 mass%, based on the polymeric crosslinking agent (A).

### (Structure derived from polycarbonate polyol)

The structure derived from a polycarbonate polyol refers to a partial structure other than a group involved in a urethanation reaction in the molecular structure of a polycarbonate polyol. The structure derived from a polycarbonate polyol is introduced to a urethane (meth)acrylate through the polycarbonate polyol.

### (Polycarbonate polyol)

The polycarbonate polyol has a structure derived from a polyol, and, depending on circumstances, a structure derived from lactone and a carbonate bond. The polycarbonate polyol is obtained, for example, through a reaction between a polyol and a carbonate ester in the presence of a catalyst.

### (Polyol)

The polyol constituting a polycarbonate polyol includes a compound having a reaction group to cause a reaction for binding two molecules (e.g., a polycondensation reaction and an esterification reaction) such as a diol and a lactone. A lactone, like a diol, generates a polycarbonate polyol. The polyol may be a polyol having three or more hydroxyl groups (e.g., a triol and a tetraol), and is preferably a polyol having two hydroxyl groups (a diol).

### (Diol)

The diol is preferably a diol containing a hydrocarbon group represented by the following formula, a part of which may have an ether bond:

HO-R¹-OH

wherein R¹ represents a divalent hydrocarbon group having 2 to 22 carbon atoms, optionally including an ether bond in a part thereof.

In the diol containing a hydrocarbon group, the divalent hydrocarbon group may be a straight-chain, branched, or cyclic saturated or unsaturated hydrocarbon group having 2 to 22 carbon atoms. The hydrocarbon group may be aliphatic, aromatic or aromatic-aliphatic, and is preferably an aliphatic hydrocarbon group. A straight-chain aliphatic hydrocarbon group is more preferred. The number of carbon atoms in the hydrocarbon group may be 3 to 16, preferably 4 to 12, particularly 4, 5, 6 or 8.

Examples of the straight-chain aliphatic hydrocarbon group include, for example, an ethylene group, a trimethylene group (propylene group), a tetramethylene group (butylene group), a pentamethylene group, a hexamethylene group, a heptamethylene group, an octamethylene group, a nonamethylene group, a decamethylene group, an undecamethylene group, and a dodecamethylene group, and a tetramethylene group, a pentamethylene group and a hexamethylene group are preferred. Further, examples of the branched aliphatic hydrocarbon group include a 2-methyltrimethylene group, a 3-methylpentamethylene group, and a 1-methyloctamethylene group. Further, examples of the cyclic aliphatic hydrocarbon group include a cyclohexanedimethylene group.

Specific examples of the diol are as follows. Examples of the straight-chain aliphatic hydrocarbon include ethylene glycol, propane diol, butane diol, pentane diol, hexane diol, heptane diol, octane diol, nonane diol, decane diol, undecane diol, and dodecane diol, and butane diol, pentane diol and n-hexane diol are preferred. Examples of the branched aliphatic hydrocarbon group include 2-methylpropane diol, 3-methyl-1,5-pentane diol, and 1-methyl-1,8-octane diol, and examples of the cyclic aliphatic hydrocarbon include cyclohexane diol and cyclohexane dimethanol dimer diol.

Preferred examples of the diol are as follows:

HO-Z¹-OH (1A)

HO-Z²-OH (1B)

wherein Z¹ represents a divalent straight-chain aliphatic hydrocarbon group having 2 to 12 carbon atoms; and
Z² represents a divalent cyclic aliphatic hydrocarbon group having 6 to 18 carbon atoms.

The "divalent straight-chain aliphatic hydrocarbon group having 2 to 12 carbon atoms" refers to a group of "straight-chain aliphatic hydrocarbon having 2 to 12 carbon atoms" with two hydrogen removed. Specific examples of the "divalent straight-chain aliphatic hydrocarbon group having 2 to 12 carbon atoms" include, for example, an ethylene group, a trimethylene group (propylene group), a tetramethylene group (butylene group), a pentamethylene group, a hexamethylene group, a heptamethylene group, an octamethylene group, a nonamethylene group, a decamethylene group, an undecamethylene group, and a dodecamethylene group. A tetramethylene group, a pentamethylene group and a hexamethylene group are preferred.

The "divalent cyclic aliphatic hydrocarbon group having 6 to 18 carbon atoms" refers to a group of "cyclic aliphatic hydrocarbon having 6 to 18 carbon atoms" with two hydrogen removed. Examples of the "divalent cyclic aliphatic hydrocarbon group having 6 to 18 carbon atoms" include, for example, a 1,3-cyclohexylene group, a 1,4-cyclohexylene group, and a 1,4-cyclohexanedimethylene group. A 1,4-cyclohexanedimethylene group is preferred.

### (Polyol represented by formula (1A))

Examples of the polyol represented by the formula (1A) (polyol (1A)) include, for example, ethylene glycol, propane diol, butane diol, pentane diol, hexane diol, heptane diol, octane diol, nonane diol, decane diol, undecane diol, and dodecane diol. Among them, an aliphatic polyol having 2 to 10 carbon atoms, with a straight chain or a branched chain is preferred, and 2-methyl-1,3-propane diol, 1,4-butane diol, 1,5-pentane diol and 1,6-hexane diol are more preferred.

The polyol (1A) may be used alone, or in combination of two or more. Also, a small amount of ether bonds or a small amount of branched aliphatic polyols may be included in a molecule of the polyol (1A) within a range not to impair the function and properties of the target urethane (meth)acrylate.

### (Polyol represented by formula (1B))

Examples of the polyol represented by the formula (1B) (hereinafter, also referred to as polyol (1B)) include, for example, 1,3-cyclohexane diol, 1,4-cyclohexane diol, and 1,4-cyclohexane dimethanol. 1,4-cyclohexane dimethanol is preferably used.

The polyol (1B) may be used alone, or in combination of two or more. Also, a small amount of ether bonds or a small amount of aromatic polyols may be included in a molecule of the polyol (1B) within a range not to impair the function or properties of the target urethane (meth)acrylate.

### (Lactone)

Lactone is a cyclic ester, and is a compound generated by dehydration condensation between a hydroxyl group and a carboxyl group in a same molecule.

Specific examples of the lactone include δ-valerolactone and ε-caprolactone.

The polycarbonate polyol is preferably obtained by a reaction of at least one polyol selected from the group consisting of the formula (1A) and the formula (1B) with a carbonate ester in the presence of a catalyst. Examples of the polycarbonate polyol include a polycarbonate polyol obtained from 1,6-hexane diol as a raw material (ETERNACOLL (registered trademark) UC-100 manufactured by Ube Industries, Ltd.), a polycarbonate polyol obtained from a mixture (1:3) of 1,4-cyclohexane dimethanol and 1,6-hexane diol as raw materials (ETERNACOLL (registered trademark) UM-90(1/3) manufactured by Ube Industries, Ltd.), a polycarbonate polyol obtained from a mixture (1:1) of 1,4-cyclohexane dimethanol and 1,6-hexane diol as raw materials (ETERNACOLL (registered trademark) UM-90(1/1) manufactured by Ube Industries, Ltd.), a polycarbonate polyol obtained from a mixture (3:1) of 1,4-cyclohexane dimethanol and 1,6-hexane diol as raw materials (ETERNACOLL (registered trademark) UM-90(3/1) manufactured by Ube Industries, Ltd.), polycarbonate polyols obtained from 1,6-hexane diol as a raw material (such as ETERNACOLL (registered trademark) UH-100, UH-200, manufactured by Ube Industries, Ltd.), and polycarbonate polyols obtained from a mixture (1:1) of 1,5-pentane diol and 1,6-hexane diol as raw materials (such as ETERNACOLL (registered trademark) PH-50, PH-100, manufactured by Ube Industries, Ltd.). From the viewpoint of having excellent high-temperature adhesiveness when made into a photocurable resin composition, UM-90(1/3), UM-90(1/1), UM-90(3/1), and PH-100 are more preferred, and UM-90(1/3) and PH-100 are particularly preferred.

### [Production method of polycarbonate polyol]

The production method of polycarbonate polyol is not particularly limited, and is suitably performed, for example, by a method including mixing a polyol, a carbonate ester and a catalyst to react while distilling off low-boiling point components (e.g., by-produced alcohol).

Incidentally, the reaction may be split into several steps including obtaining a prepolymer of polycarbonate polyol (having a lower molecular weight than the target polycarbonate polyol) and then reacting the prepolymer to further increase the molecular weight.

The polyol is as described above. The polyol includes diol and lactone.

### (Carbonate ester)

Examples of the carbonate ester include, for example, an alkyl carbonate such as dimethyl carbonate, diethyl carbonate, and methylethyl carbonate; a diaryl carbonate such as diphenyl carbonate; a cyclic carbonate ester such as ethylene carbonate and propylene carbonate. Use of dimethyl carbonate, diethyl carbonate and ethylene carbonate is preferred.

Incidentally, the carbonate ester may be used alone, or in combination of two or more.

The amount of the carbonate ester used is preferably 0.8 mol to 2.0 mol, more preferably 0.9 mol to 1.5 mol, based on 1 mol of the polyols in total. By setting the amount of carbonate ester used within this range, a target polycarbonate polyol is efficiently obtained at a sufficiently high reaction rate.

### (Reaction temperature and reaction pressure)

The reaction temperature in synthesis of the polycarbonate polyol may be appropriately adjusted depending on the types of polyol and carbonate ester, and is preferably 120°C to 180°C, more preferably 130°C to 170°C.

The reaction pressure in synthesis of the polycarbonate polyol is not particularly limited as long as the pressure allows the reaction to proceed while removing low-boiling point components, and is preferably the normal pressure or a reduced pressure. By setting the reaction pressure in synthesis of the polycarbonate polyol within this range, the occurrence of a consecutive reaction and a side reaction can be restrained, so that a target polycarbonate polyol can be efficiently obtained.

### (Catalyst)

As the catalyst used in synthesis of the polycarbonate polyol, a known ester exchange catalyst may be used. Examples of the catalyst include a metal such as lithium, sodium, potassium, rubidium, cesium, magnesium, calcium, strontium, barium, zinc, aluminum, titanium, zirconium, cobalt, germanium, tin, and cerium, and a hydroxide, an alkoxide, a carboxylate, a carbonate, a hydrogencarbonate, a sulfate, a phosphate and a nitrate thereof, and an organic metal. Sodium hydride, titanium tetraisopropoxide, titanium tetrabutoxide, zirconium tetrabutoxide, zirconium acetylacetate, zirconium oxyacetate, dibutyltin dilaurate, dibutyltin dimethoxide, and dibutyltin oxide are preferably used.

Incidentally, the catalyst may be used alone, or in combination of two or more.

The amount of the catalyst used is preferably 0.1 mmol to 100 mmol, more preferably 0.5 mmol to 50 mmol, still more preferably 1 mmol to 20 mmol, based on 1 mol of polyols in total. By setting the amount of the catalyst used within this range, post-processing is prevented from being complicated, so that a target polycarbonate polyol can be efficiently obtained.

Incidentally, the catalyst may be used (added) all at once at the start of the reaction, or may be used (added) in batches at the start of the reaction and after the start of the reaction.

### (Structure derived from polyether polyol)

The structure derived from a polyether polyol refers to a partial structure of the molecular structure of a polyether polyol other than a group involved in a urethanation reaction. The structure derived from a polyether polyol is introduced into a urethane (meth)acrylate through the polyether polyol.

### (Polyether polyol)

The polyether polyol is not particularly limited as long as the polyol has an ether bond in the molecule. Examples of the polyether polyol include a polytetramethylene ether glycol, a polytetramethylene ether glycol having an alkyl side chain, a polypropylene glycol, a polyethylene glycol, and a copolymer of two or more thereof; a random copolymer or a block copolymer of ethylene oxide and propylene oxide, or a random copolymer or a block copolymer of ethylene oxide and butylene oxide. For example, a polytetramethylene ether glycol, a polytetramethylene ether glycol having an alkyl side chain, a polypropylene glycol, a polyethylene glycol, and a copolymer of two or more thereof are preferred.

### (Structure derived from polyester polyol)

The structure derived from a polyester polyol refers to a partial structure other than a group involved in a urethanation reaction in the molecular structure of a polyester polyol. The structure derived from a polyester polyol is introduced into a urethane (meth)acrylate through the polyester polyol.

### (Polyester polyol)

The polyester polyol is not particularly limited as long as the polyol has an ester bond in the molecule, and examples of the polyester polyol include a polyester polyol obtained by condensation of a carboxylic acid and a polyhydric alcohol, a polyester polyol obtained by condensation of a carboxylate ester and a polyhydric alcohol, a polyester polyol obtained by condensation of a mixture of carboxylic acid and carboxylate ester and a polyhydric alcohol, a polyester polyol obtained by ring-opening polymerization of a cyclic ester, and a polyester polyol obtained by condensation of a polyhydric alcohol with a hydroxycarboxylic acid.

Examples of the specific polyester polyol compounds include, for example, polyethylene adipate diol, polypropylene adipate diol, polybutylene adipate diol, polypentylene adipate diol, polyhexylene adipate diol, polyethylene butylene adipate diol, polyhexamethylene isophthalate adipate diol, polyethylene succinate diol, polybutylene succinate diol, polyethylene sebacate diol, polybutylene sebacate diol, poly-s-caprolactone diol, poly(3-methyl-1,5-pentylene adipate)diol, and a polycondensate of 1,6-hexane diol and a dimer acid. Polypropylene adipate diol, polybutylene adipate diol, polypentylene adipate diol, polyhexylene adipate diol, poly-γ-butyrolactone, poly-δ-valerolactone, and poly-ε-caprolactone diol are preferred, and polybutylene adipate diol, polyhexylene adipate diol and poly-ε-caprolactone diol are more preferred.

### (Structure derived from polyisocyanate)

The structure derived from a polyisocyanate refers to a partial structure other than a group involved in a urethanation reaction in the molecular structure of a polyisocyanate. The structure derived from a polyisocyanate is introduced into a urethane (meth)acrylate through the polyisocyanate.

As the polyisocyanate, a bifunctional or more functional isocyanate may be used, and preferably the polyisocyante is a diisocyanate.

Preferably, the diisocyanate is a compound represented by a formula:

OCN-R²-NCO

wherein R² is a divalent hydrocarbon group having 2 to 20 carbon atoms.

The divalent hydrocarbon group may be a straight-chain aliphatic hydrocarbon group having 2 to 12 carbon atoms, a branched aliphatic hydrocarbon group having 3 to 12 carbon atoms, acyclic aliphatic hydrocarbon group having 6 to 18 carbon atoms, or an aromatic hydrocarbon atom having 6 to 18 carbon atoms. Due to excellent weather resistance, a straight-chain aliphatic hydrocarbon group and an cyclic aliphatic hydrocarbon group are preferred. Due to obtainability of high-strength coating film, an aromatic hydrocarbon group is preferred.

Examples of the straight-chain aliphatic hydrocarbon group having 2 to 12 carbon atoms include an ethylene group, a trimethylene group (propylene group), a tetramethylene group (butylene group), a pentamethylene group, a hexamethylene group, a heptamethylene group, an octamethylene group, a nonamethylene group, a decamethylene group, an undecamethylene group, and a dodecamethylene group; and tetramethylene group, a pentamethylene group, and a hexamethylene group are preferred.

Examples of the branched aliphatic hydrocarbon group having 3 to 12 carbon atoms include a 2- or 3-methyl-1,5-pentyl group, and a 2,2,4- or 2,4,4-trimethylhexamethylene group.

Examples of the cyclic aliphatic hydrocarbon group having 6 to 18 carbon atoms include a 1,4-cyclohexylene group, a methylcyclohexylene group, a 1,3-dimethylenecyclohexylene group, a 5-(1,3,3-trimethylcyclohexyl)-1-methylene group (a group derived from isophorone diisocyanate), a 4,4'-dicyclohexylene methylene group (a group derived from 4-4'-dicyclohexylmethane diisocyanate), and a norbornylene group.

Examples of the aromatic hydrocarbon group having 6 to 18 carbon atoms include a phenylene group, a tolylene group, a xylylene group, a tetramethylxylylene group, and a 4,4'-diphenylenemethylene group.

### (Polyisocyanate)

The polyisocyanate may be appropriately selected depending on the purpose and the use, and, for example, a straight-chain aliphatic diisocyanate such as hexamethylene diisocyanate; a branched aliphatic diisocyanate such as 2- or 3-methyl-1,5-pentyldiisocyanate, and 2,2,4- or 2,4,4-trimethylhexamethylene diisocyanate;
a cyclic aliphatic diisocyanate such as 1,4-cyclohexylene diisocyanate, methylcyclohexylene diisocyanate, 4,4'-methylenebiscyclohexyl diisocyanate, isophorone diisocyanate, cyclohexane-1,3-diylbis(methylene)diisocyanate, and norbornyl diisocyanate; and

an aromatic-aliphatic diisocyanate such as phenylene diisocyanate, 2,4-tolylene diisocyanate, 2,6-tolylene diisocyanate, diphenylmethane-4,4'-diisocyanate, naphthalene-1,5-diisocyanate, 3,3'-dimethyl-4,4'-biphenylene diisocyanate, polymethylene polyphenyl isocyanate, tetramethylxylylene diisocyanate, and xylylene diisocyanate (XDI) are used.

The polyisocyanate may be used alone, or in combination of two or more. A part or the whole of the structure of the polyisocyanate may be subjected to derivatization such as isocyanuration, carbodimidization, or biuretization. Among them, due to excellent weather resistance, isophorone diisocyanate and 4,4'-methylenebiscyclohexyl diisocyanate are preferred. Due to obtainability of a particularly high-strength coating film, 2,4-tolylene diisocyanate, 2,6-tolylene diisocyanate, and diphenylmethane-4,4'-diisocyanate are preferred. Also, ones having an asymmetrical structure are preferred for suitable production of urethane acrylate, and examples of the polyisocyanate include isophorone diisocyanate and 2,4-tolylene diisocyanate.

### (Structure derived from (meth)acrylate)

The structure derived from a (meth)acrylate refers to a partial structure other than a group involved in a urethanation reaction in the molecular structure of a urethane (meth)acrylate. The structure derived from a (meth)acrylate is introduced into the urethane (meth)acrylate through the (meth)acrylate. For example, a (meth)acrylate having a hydroxyl group, and a (meth)acrylate having an isocyanato group may be used for introduction of the structure derived from a (meth)acrylate. A (meth)acrylate having a hydroxyl group reactive with isocyanate is preferred.

### ((Meth)acrylate having hydroxyl group)

The (meth)acrylate having a hydroxyl group is not particularly limited, and ones modified with an alkyleneoxy group such as a (meth)acrylate ethyleneoxy group and a propyleneoxy group having a hydroxyl group in a part of the molecular structure can be suitably used. Also, in the (meth)acrylate having a hydroxyl group, a plurality of (e.g., 2 to 6, particularly 2 or 3) (meth)acrylates may be included. The (meth)acrylate having a hydroxyl group may be a polyfunctional (meth)acrylate or a monofunctional (meth)acrylate. In the polyfunctional (meth)acrylate, the number of (meth)acrylate group may be, for example, 2 to 6, particularly 2 or 3.

### (Polyfunctional (meth)acrylate having hydroxyl group)

Examples of the polyfunctional (meth)acrylate having a hydroxyl group include pentaerythritol tri(meth)acrylate, pentaerythritol di(meth)acrylate, trimethylolpropane di(meth)acrylate, dipentaerythritol penta(meth)acrylate, dipentaerythritol tetra(meth)acrylate, dipentaerythritol tetra(meth)acrylate, dipentaerythritol tri(meth)acrylate, dipentaerythritol di(meth)acrylate, ditrimethylol propane tri(meth)acrylate, ditrimethylol propane di(meth)acrylate, or ethyleneoxy-modified products, propyleneoxy-modified products and lactone-modified products thereof.

Preferred examples include pentaerythritol tri(meth)acrylate, dipentaerythritol penta(meth)acrylate, dipentaerythritol tetra(meth)acrylate.

Use of a mixture of pentaerythritol triacrylate and pentaerythritol tetraacrylate (ARONIX (registered trademark) M306, manufactured by Toagosei Co., Ltd., tri form: 65 to 70%), or a mixture of dipentaerythritol pentaacrylate and dipentaerythritol hexaacrylate (ARONIX (registered trademark) M403, manufactured by Toagosei Co., Ltd., penta form: 50 to 60%) is more preferred.

### (Monofunctional (meth)acrylate having hydroxyl group)

Examples of the monofunctional (meth)acrylate having a hydroxyl group include hydroxyethyl (meth)acrylate, hydroxypropyl (meth)acrylate, hydroxybutyl (meth)acrylate, hydroxypentyl (meth)acrylate, hydroxyhexyl (meth)acrylate, hydroxyheptyl (meth)acrylate, hydroxyoctyl (meth)acrylate, and use of hydroxyethyl (meth)acrylate, hydroxypropyl (meth)acrylate, or hydroxybutyl (meth)acrylate is preferred.

The urethane (meth)acrylate may contain less than 3 mass% of a (meth)acrylate compound having a hydroxyl group, based on the total amount of the urethane (meth)acrylate. The amount of the (meth)acrylate compound having a hydroxyl group may be 0.1 to 2.5 mass%, for example, 0.2 to 2 mass%, based on the total amount of the urethane (meth)acrylate.

The urethane (meth)acrylate having a hydroxyl group may be used alone, or in combination of two or more. Further, a (meth)acrylate having another active hydrogen group and having no hydroxyl group may be used in combination.

In the urethane (meth)acrylate, only a polyfunctional (meth)acrylate having a hydroxyl group, or only a monofunctional (meth)acrylate having a hydroxyl group may be used. Alternatively, a polyfunctional (meth)acrylate having a hydroxyl group and a monofunctional (meth)acrylate having a hydroxyl group may be used in combination.

### [Production method of urethane (meth)acrylate]

The urethane (meth)acrylate may be obtained by a reaction of, for example, a polycarbonate polyol, a polyisocyanate, and a (meth)acrylate containing a hydroxyl group.

The reaction form thereof is not particularly limited. The reaction method may be appropriately selected from a known one-shot method and prepolymer method, and a method including producing a polyurethane from a reaction between a polycarbonate polyol and a polyisocyanate and then reacting with a (meth)acrylate containing a hydroxyl group is preferably adopted.

Incidentally, in order to improve the function and properties of a target urethane (meth)acrylate, multiple types of polycarbonate polyols or polycarbonate polyols of the same type having different molecular weight may be used in combination. Further, for the same reason, multiple types of polyisocyanates may be used in combination, or multiple types of polyfunctional (meth)acrylate having a hydroxyl group or multiple types of monofunctional (meth)acrylate having a hydroxyl group may be used in combination.

In the reaction of urethane (meth)acrylate, the molar ratio of the isocyanato group (NCO group) of the polyisocyanate to the total hydroxyl groups (OH group) of the polycarbonate polyol and the (meth)acrylate containing a hydroxyl group (NCO group/OH group) is preferably 0.7/1 to 1.4/1, more preferably 0.8/1 to 1.3/1.

By setting a molar ratio (NCO group/OH group) within this range, a terminal hydroxyl group or a terminal isocyanato group of the polyurethane is converted into an end group substantially having a plurality of (meth)acrylate groups, so that the remaining unreacted isocyanato groups can be decreased.

Incidentally, the isocyanato group remaining at an end of the urethane (meth)acrylate may be left as it is, as long as the subsequent conversion into a cured product is not impaired, or may be inactivated through a further reaction with a compound having a reactivity with the isocyanato group.

### (Catalyst)

In a reaction of urethane (meth)acrylate, a known polymerization catalyst may be used to improve the reaction rate. Specific examples of the polymerization catalyst for preferred use include an organic tin compound such as dibutyltin diacetate and dibutyltin dilaurate; an organic titanium compound such as titanium tetraacetylacetonate and titanium diisopropoxybis(ethylacetoacetate); an organic zirconium compound such as zirconium tetraacetylacetonate and zirconium dibutoxybis(ethylacetoacetate); bismuth 2-ethylhexanoate, bismuth neodecanoate, bismuth naphthenate, bismuth dibutylphosphate, and a tertiary amine such as triethylamine.

The polymerization catalyst may be used alone, or in combination of two or more.

The amount of the polymerization catalyst used is preferably 0.0005 mass% to 0.1 mass%, more preferably 0.001 mass% to 0.05 mass%, based on the total amount of polycarbonate polyol, polyisocyanate, and (meth)acrylate containing a hydroxyl group.

By setting an amount of the catalyst used in this range, a sufficient reaction rate can be obtained, and post-processing is prevented from being complicated due to a reduced amount of the remaining catalyst.

### (Solvent)

In the reaction of urethane (meth)acrylate, a solvent not involved in the reaction may be appropriately used. As specific examples of the solvent preferably used, for example, ketones such as acetone, methyl ethyl ketone, methyl isobutyl ketone, and cyclohexanone; esters such as ethyl acetate, butyl acetate, propyleneglycol monomethyl ether acetate, propyleneglycol monoethyl ether acetate, and dipropyleneglycol monomethyl ether acetate; ethers such as ethyleneglycol dimethyl ether, ethyleneglycol diethyl ether, dipropyleneglycol dimethyl ether, dipropyleneglycol diethyl ether, triethyleneglycol dimethyl ether, triethyleneglycol diethyl ether, tetrahydrofuran, and dioxane; aromatic hydrocarbons such as benzene, toluene, xylene, and tetramethylbenzene; amides such as dimethylformamide, diethylformamide, and dimethylacetamide; and sulfoxides such as dimethyl sulfoxide can be used.

The solvent may be used alone, or in combination of two or more. Through use of the solvent, a solvent solution of urethane (meth)acrylate can be obtained.

The amount of the solvent used is preferably 5 mass% to 200 mass%, more preferably 10 mass% to 100 mass%, still more preferably 20 mass% to 80 mass%, based on the total amount of polycarbonate polyol, polyisocyanate and (meth)acrylate containing a hydroxyl group or (meth)acrylate containing an isocyanato group.

By setting an amount of the solvent used in this range, the homogeneity and stirring performance of the reaction liquid are improved.

### (Polymerization inhibitor)

In the reaction of urethane (meth)acrylate, desirably, a polymerization inhibitor or an antioxidant is present to suppress the polymerization and oxidation of (meth)acrylate containing a hydroxyl group which is a raw material, and the produced urethane (meth)acrylate. Examples of the polymerization inhibitor and the antioxidant for use include hydroquinone, p-methoxyphenol, 2,4-dimethyl-6-t-butylphenol, 2,6-t-butyl-p-cresol, p-benzoquinone, and 2,5-dihydroxy-p-benzoquinone.

Incidentally, the polymerization inhibitor and the antioxidant may be used alone, or in combination of two or more.

The amount of the polymerization inhibitor and the antioxidant added is preferably 0.00005 mass% to 0.01 mass%, more preferably 0.0001 mass% to 0.005 mass%, still more preferably 0.0003 mass% to 0.003 mass%, based on the total amount of polycarbonate polyol, polyisocyanate and (meth)acrylate containing a hydroxyl group.

By setting an amount of the polymerization inhibitor and the antioxidant added in this range, polymerization and oxidation cab be sufficiently suppressed, and post-processing thereof is prevented from being complicated.

### (Chain extender)

In the reaction of urethane (meth)acrylate, a chain extender may be used to increase the molecular weight. The chain extender for use may be appropriately selected depending on the purpose and the use. Specific examples of the chain extender for use include, for example:
water;
a low-molecular weight polyol such as ethylene glycol, 1,3-propane diol, 1,4-butane diol, 1,5-pentane diol, 1,6-hexane diol, neopentyl glycol, 1,10-decane diol, 1,1-cyclohexane dimethanol, 1,4-cyclohexane dimethanol, tricyclodecane dimethanol, xylylene glycol, bis(p-hydroxy)diphenyl, bis(p-hydroxyphenyl)propane, 2,2-bis[4-(2-hydroxyethoxy)phenyl]propane, bis[4-(2-hydroxyethoxy)phenyl]sulfone, and 1,1-bis[4-(2-hydroxyethoxy)phenyl]cyclohexane;
a polymer polyol such as polyester polyol, polyester amide polyol, polyether polyol, polyether ester polyol, polycarbonate polyol, and polyolefin polyol; and
a polyamine such as ethylene diamine, isophorone diamine, 2-methyl-1,5-pentane diamine, aminoethyl ethanol amine, diethylene triamine, triethylene tetramine, tetraethylene pentamine, and pentaethylene hexamine. The chain extender may be used alone, or in combination of two or more.

The reaction of urethane (meth)acrylate is suitably performed by a method including mixing a polycarbonate polyol, a polyisocyanate, a catalyst and a solvent to react at preferably 0°C to 150°C, more preferably 20°C to 100°C, then adding a polymerization inhibitor, an antioxidant and a (meth)acrylate containing a hydroxyl group to the resulting reaction liquid, and proceeding an additional reaction at the same temperature. The polymerization inhibitor and the antioxidant may be added after the reaction of the (meth)acrylate having a hydroxyl group.

Since the resulting urethane (meth)acrylate is not necessarily stable to light and oxygen in the atmosphere, the resulting urethane (meth)acrylate is desirably applied to a necessary use as a solvent solution of urethane (meth)acrylate without particular isolation or purification, though not particularly limited.

### (Another polyol)

The urethane (meth)acrylate may be appropriately produced in the presence of another polyol to further improve the function. In other words, the urethane (meth)acrylate of the present invention may further have a structure derived from another polyol.

Examples of the other polyol include a straight-chain polyol such as ethylene glycol, propane diol, butane diol, pentane diol, hexane diol, heptane diol, octane diol, nonane diol, decane diol, undecane diol, dodecane diol, diethylene glycol, and triethylene glycol;
a branched polyol such as 2-methyl-1,3-propane diol, neopentyl glycol, 3-methyl-1-5-pentane diol, and 1,5-hexane diol; and
a cyclic polyol such as 1,3-cyclohexane diol, 1,4-cyclohexane diol, and 1,4-cyclohexane dimethanol. A polyol used as a raw material in production of the polycarbonate polyol to constitute the urethane (meth)acrylate (preferably a polyol represented by the formula (1A) or a polyol represented by the formula (1B)) is preferred.

The other polyol may be used alone, or in combination of two or more.

These low-molecular weight polyols may have an acidic group such as a carboxyl group, a thiocarboxyl group, a sulfone group, and a phenolic hydroxyl group within the extent not to impair the function or properties of the urethane (meth)acrylate. Examples of the low-molecular weight polyol include 2,2-dimethylol propionic acid which is commonly used in production of an aqueous polyurethane resin dispersion.

The amount of the other polyol may be 0 to 10 mass%, for example, 0.01 mass% to 5 mass%, or 0.1 to 2 mass%, based on the total amount of the urethane (meth)acrylate. The other polyol may not be used in the urethane (meth)acrylate.

### (Compound containing acidic group)

In order to further improve the function of the urethane (meth)acrylate, a compound containing an acidic group may be further present in a proper manner.

Examples of the acidic group of the acidic group-containing compound include a carboxyl group, a thiocarboxyl group, a sulfone group, and a phenolic hydroxyl group.

Examples of the acidic group-containing compound include organic carboxylic acids such as propionic acid, butanoic acid, pentanoic acid, hexanoic acid, oxalic acid, succinic acid, adipic acid, benzoic acid, phthalic acid, and terephthalic acid; thiocarboxylic acids i.e., the organic acids with a part or all of carbon atoms substituted with sulfur atoms; sulfonic acids such as methanesulfonic acid, ethanesulfonic acid, benzenesulfonic acid, and p-toluenesulfonic acid; and phenols such as phenol, cresol, catechol, and hydroquinone.

Incidentally, the acidic group-containing compound may be used alone, or in combination of two or more.

The amount of the acidic group-containing compound may be 0 to 5 mass%, for example, 0.01 to 3 mass%, or 0.1 to 2 mass%, based on the total amount of the urethane (meth)acrylate. The acidic group-containing compound may not be used in the urethane (meth)acrylate.

### (Physical properties of urethane (meth)acrylate)

The weight-average molecular weight of the urethane (meth)acrylate may be 3000 to 30000, preferably 5000 to 20000, more preferably 5500 to 17000. By setting a weight-average molecular weight in this range, the warpage of a laminate of a photocurable resin composition and a substrate exposed to high temperature can be reduced.

### <<Polymeric material (B)>>

Although the embodiment of the polymeric material (B) is described as follows, the embodiment not particularly described may be performed in the same manner as in the embodiment of the polymeric crosslinking agent (A).

The polymeric material (B) is one other than the polymeric crosslinking agent (A).

In the present invention, the polymeric material (B) is a thermosetting resin. Examples of the thermosetting resin include a phenol resin, an epoxy resin, an unsaturated polyester resin, and a polyurethane resin. The polyurethane resin has no acrylic group.

The polymeric material (B) comprises a polyurethane resin comprising a structure derived from a polycarbonate polyol, and having no acrylic group.

The polymeric material (B) may comprises a polyurethane resin comprising a structure derived from a polycarbonate polyol, and having no acrylic group (polycarbonate polyol-based polyurethane resin) alone (100 mass%, based on the polymeric material (B)), or may include other thermosetting resin other than a polycarbonate polyol-based polyurethane resin. Examples of the other thermosetting resin include a phenol resin, an epoxy resin, an unsaturated polyester resin, and a polyurethane resin other than a polycarbonate polyol-based polyurethane resin.

In the polymeric material (B), the lower limit of the amount of the polycarbonate polyol-based polyurethane resin is 20 mass%, preferably 30 mass%, more preferably 40 mass%, particularly 60 mass%, especially 90 mass%, based on the polymeric material (B). The upper limit of the amount of the polycarbonate polyol-based polyurethane resin is 50 mass%, preferably 70 mass%, more preferably 80 mass%, particularly 90 mass%, especially 100 mass%, based on the polymeric material (B).

The polyurethane resin comprising a structure derived from a polycarbonate polyol, and having no acrylic group (a polycarbonate polyol-based polyurethane resin) has a structure derived from a polycarbonate polyol and a structure derived from a polyisocyanate. The polyurethane resin is different from a urethane (meth)acrylate in having no (meth)acrylic group.

The explanation on the structure derived from a polycarbonate polyol and the structure derived from a polyisocyanate in the polycarbonate polyol-based polyurethane resin is the same as the above explanation on the structure derived from a polycarbonate polyol and the structure derived from a polyisocyanate in the polymeric crosslinking agent (A). Accordingly, regarding the polyurethane resin, the explanation on the structure derived from a polycarbonate polyol and the structure derived from a polyisocyanate is omitted. Regarding the polyurethane resin, the structure derived from a polycarbonate polyol and the structure derived from a polyisocyanate can be referred to the explanation on the structure derived from a polycarbonate polyol and the structure derived from a polyisocyanate in the polymeric crosslinking agent (A).

### [Production method of polyurethane resin]

The production method of a polyurethane resin is not particularly limited, and the polyurethane resin may be obtained, for example, by a reaction between a polycarbonate polyol and a polyisocyanate (hereinafter, also referred to as "polyurethanation reaction").

The reaction form is not particularly limited. The reaction method is appropriately selected, for example, from a known one-shot method and prepolymer method, in which a polyurethane resin is produced by a reaction between a polycarbonate polyol and a polyisocyanate.

In order to improve the function and the properties of a target polyurethane resin, multiple types of polycarbonate polyols or polycarbonate polyols of the same type having a different molecular weight may be used in combination. For the same reason, multiple types of polyisocyanates may be used in combination.

In the polyurethanation reaction, the molar ratio of the isocyanato group (NCO group) of the polyisocyanate to the polycarbonate polyol (NCO group/OH group) is preferably 0.7/1 to 1.4/1, more preferably 0.8/1 to 1.3/1.

By setting a molar ratio (NCO group/OH group) in this range, the remaining unreacted isocyanato groups can be decreased.

Incidentally, the isocyanato group remaining at an end of the urethane (meth)acrylate may be left as it is, as long as the subsequent conversion into a cured product is not impaired, or may be inactivated through an additional reaction with a compound having reactivity with the isocyanato group.

The explanation on the polycarbonate polyol and the polyisocyanate used in production of the polyurethane resin is the same as the above explanation on the polycarbonate polyol and the polyisocyanate in the polymeric crosslinking agent (A). Accordingly, the explanation on the polycarbonate polyol and the polyisocyanate used in production of the polyurethane resin is omitted. For the explanation on the polycarbonate polyol and the polyisocyanate used in production of the polyurethane resin, the above explanation on the polycarbonate polyol and the polyisocyanate in the polymeric crosslinking agent (A) can be referred to. The explanation on the chain extender, the solvent and the other polyol used in production of the polyurethane resin is the same as the explanation in the polymeric crosslinking agent (A).

### (Polymerization catalyst for urethanation)

In a urethanation reaction, a known polymerization catalyst may be used to improve the reaction rate. For example, a tertiary amine and an organic metal salt of tin and titanium are used.

Specific examples of a polymerization catalyst for suitable use include, for example, an organic tin compound such as dibutyltin diacetate and dibutyltin dilaurate, an organic titanium compound such as titanium tetraacetylacetonate and titanium diisopropoxybis(ethylacetoacetate), an organic zirconium compound such as zirconium tetraacetylacetate and zirconium dibutoxybis(ethylacetoacetate), bismuth 2-ethylhexanoate, bismuth neodecanoate, bismuth naphthenate, bismuth dibutylphosphate, and a tertiary amine such as triethylamine.

The polymerization catalyst may be used alone, or in combination of two or more.

The amount of the catalyst used is preferably 0.0005 mass% to 0.1 mass%, more preferably 0.001 mass% to 0.05 mass%, based on the total amount of the polycarbonate polyol and the polyisocyanate.

By setting an amount of the catalyst used in this range, a sufficient reaction rate can be obtained, and post-processing is prevented from being complicated due to a reduced amount of the remaining catalyst.

Incidentally, the polymerization catalyst may be referred to Keiji Yoshida, "Polyurethane resin" published by Nippon Kogyo Shimbun, 1969, pp. 23-32, the disclosure of which is incorporated herein by reference.

The polyurethanation reaction may be performed by adding a terminal stopper for adjustment of the molecular weight.

Also, for example, a thermal stabilizer, a light stabilizer, a plasticizer, an inorganic filler, a lubricant, a colorant, a silicone oil, a foaming agent, and a flame retardant may be present depending on the purpose, in the polyurethane.

The resulting polyurethane may be used to produce, for example, a flexible polyurethane foam, a rigid polyurethane foam, a thermoplastic polyurethane, a solvent-based polyurethane solution, and an aqueous polyurethane resin dispersion. Further, these may be processed into, for example, an artificial leather or a synthetic leather, an insulating material, a cushioning material, an adhesive, a coating agent, and a formed product such as film.

### (Physical properties of polymeric material (B))

The weight-average molecular weight of the polymeric material (B) may be 3000 to 30000, and is preferably 6000 to 20000, more preferably 8000 to 20000. By setting the weight-average molecular weight in this range, a photocurable resin composition having excellent high-temperature adhesiveness can be obtained.

### <<Polymerizable compound (C) (other than polymeric crosslinking agent (A)>>

The photocurable resin composition of the present invention may further include a polymerizable compound (C) (other than urethane (meth)acrylate). With a polymerizable compound (C) included, the viscosity of the photocurable resin composition is adjusted and physical properties of the resulting cured film such as the flexibility and the resistance to moist heat of a coating film can be improved.

The polymerizable compound (C) is one other than the polymeric crosslinking agent (A) and the polymeric material (B).

The polymerizable compound (C) is a compound having an ethylenically unsaturated double bond. The preferred polymerizable compound is a (meth)acrylate compound, particularly a (meth)acrylate ester. In the polymerizable compound, the number of the ethylenically unsaturated double bond is one or two or more (for example, 2 to 6, particularly 2 or 3).

The polymerizable compound is not particularly limited, and examples of the used polymerizable compound include a (meth)acrylate alkyl ester such as methyl (meth)acrylate, ethyl (meth)acrylate, isopropyl (meth)acrylate, n-butyl (meth)acrylate, t-butyl (meth)acrylate, isobutyl (meth)acrylate, lauryl (meth)acrylate, dodecyl (meth)acrylate, cyclohexyl (meth)acrylate, 4-t-butylcyclohexyl (meth)acrylate, isoboronyl (meth)acrylate, adamantyl (meth)acrylate, dicyclopentenyl oxyethyl (meth)acrylate, phenoxymethyl (meth)acrylate, and phenoxyethyl (meth)acrylate, a (meth)acrylate aralkyl ester such as benzyl (meth)acrylate and phenethyl (meth)acrylate, a (meth)acrylate aryl ester such as phenyl (meth)acrylate, and a monofunctional (meth)acrylate compound such as 2-hydroxyethyl (meth)acrylate, 2-hydroxypropyl (meth)acrylate, 3-hydroxypropyl (meth)acrylate, 2-hydroxybutyl (meth)acrylate, and 4-hydroxybutyl (meth)acrylate; and
a polyfunctional (meth)acrylate compound such as butanediol di(meth)acrylate, hexanediol di(meth)acrylate, octanediol di(meth)acrylate, nonanediol di(meth)acrylate, dodecanediol di(meth)acrylate, ethoxylated hexanediol di(meth)acrylate, propoxyhexanediol di(meth)acrylate, diethylene glycol di(meth)acrylate, polyethylene glycol di(meth)acrylate, polypropylene glycol di(meth)acrylate, neopentyl glycol di(meth)acrylate, ethoxylated neopentyl glycol di(meth)acrylate, tri(meth)acrylate such as trimethylolpropane tri(meth)acrylate, ethoxylated trimethylolpropane tri(meth)acrylate, propoxylated trimethylolpropane tri(meth)acrylate, tris(2-hydroxyehtyl)isocyanurate tri(meth)acrylate, a glycerol tri(meth)acrylate, pentaerythritol tri(meth)acrylate, dipentaerythritol tri(meth)acrylate, ditrimethylolpropane tri(meth)acrylate, pentaerythritol tetra(meth)acrylate, ditrimethylolpropane tetra(meth)acrylate, dipentaerythritol tetra(meth)acrylate, dipentaerythritol penta(meth)acrylate, ditrimethylolpropane penta(meth)acrylate, dipentaerythritol hexa(meth)acrylate, and ditrimethylolpropane hexa(meth)acrylate, or an ethyleneoxy-modified product, a propyleneoxy-modified product, and a lactone-modified product thereof.

From the viewpoint of improvement in resistance to moist heat, a (meth)acrylate containing a hydroxyl group is preferred, and 2-hydroxyethyl (meth)acrylate, 2-hydroxypropyl (meth)acrylate, 3-hydroxypropyl (meth)acrylate, and 4-hydroxybutyl (meth)acrylate are more preferred.

The polymerizable compound may be used alone, or in combination of two or more.

In the case using an excessive amount of a (meth)acrylate containing a hydroxyl group in production of the urethane (meth)acrylate, the polymerizable compound may be substituted with the remaining (meth)acrylate containing a hydroxyl group, and in the case where another acrylic compound is included in the (meth)acrylate containing a hydroxyl group in production of the urethane (meth)acrylate, the other compound may be used as a substitute as the polymerizable compound.

### <<Photopolymerization initiator (D)>>

The photocurable resin composition of the present invention may further include a photopolymerization initiator (D). The photopolymerization initiator (D) is not particularly limited, and examples thereof include acetophenone, 2,2-diethoxyacetophene, p-dimethyl aminoacetophenone, benzophenone, 2-chlorobenzophenone, 4,4'-bisdiethyl amino benzophenone, benzoin ethyl ether, benzoin-n-propyl ether, benzoin isopropyl ether, benzoin isobutyl ether, benzoin n-butyl ether, benzoin dimethyl ketal, thioxanthone, p-isopropyl-α-hydroxy isobutyl phenone, 2,2-dimethoxy-2-phenylacetophonone, 1-hydroxycyclohexyl phenyl ketone, 2-methyl-1[4-(methylthio)phenyl]-2-morpholinopropane-1-one, 2-hydroxy-2-methyl-1-phenylpropane-1-one, 2,4,6-trimethyl benzophenone, 4-methyl benzophenone, bis(2,4,6-trimethylbenzoyl)phenyl phosphine oxide, diphenyl(2,4,6-trimethoxybenzoyl)phosphine oxide, and 2,2-dimethoxy-1,2-diphenyl ethenone. Preferred examples include 1-hydroxycyclohexyl phenyl ketone, bis(2,4,6-trimethylbenzoyl)phenyl phosphine oxide, and diphenyl(2,4,6-trimethoxybenzoyl)phosphine oxide.

The photopolymerization initiator (D) may be used alone, or in combination of two or more.

### <<Other components>>

In the photocurable resin composition of the present invention, an additive such as a photosensitizer, an antioxidant, an anti-yellowing agent, a UV absorber, a visible light absorber, a colorant, a plasticizer, a stabilizer, and a filler may be added on an as needed basis, in a range without impairing the effect of the present invention.

Specific examples of the photosensitizer for preferred use include, for example, triethyl amine, diethyl amine, N-methyl diethanol amine, ethanol amine, 4-dimethyl aminobenzoic acid, methyl 4-(dimethylamino)benzoate, ethyl 4-(dimethylamino)benzoate, and isoamyl 4-(dimethylamino)benzoate.

The photocurable resin composition of the present invention may comprise a thermoplastic organic polymer. Inclusion of the thermoplastic organic polymer may improve the properties of the cured product of the photocurable resin composition.

Specific examples of the photocurable resin composition for preferred use include, for example, polystyrene, polymethyl methacrylate, a methyl methacrylate-ethyl acrylate copolymer, poly(meth)acrylate, a styrene-(meth)acrylate copolymer, a (meth)acrylate-methyl methacrylate copolymer, polyvinyl butyral, a cellulose ester, polyacrylamide, and a saturated polyester. One of the thermoplastic organic polymers may be used alone, or multiple types thereof may be used by mixing.

### [Production of photocurable resin composition]

The photocurable resin composition may be produced by compounding and mixing a polymeric crosslinking agent (A), a polymeric material (B), and depending on the circumstances, a polymerizable compound (C), a photopolymerization initiator (D), and other components at a specific ratio.

The mixing method of the respective components is not particularly limited, and stirring may be performed by a homomixer or a homogenizer. The sequence of mixing of the respective components is not particularly limited. For example, to the polymeric crosslinking agent (A), the polymeric material (B) may be added to be mixed, and the polymerizable compound (C) and the photopolymerization initiator (D) may be further added in order for sequential mixing. Alternatively, the components (A) to (D) may be simultaneously added to be mixed.

In the photocurable resin composition, the amount of the polymeric crosslinking agent (A) may be 2 mass% or more, for example, 3 mass% or more, or 5 mass% or more, and 98 mass% or less, for example, 95 mass% or less, or 90 mass% or less, based on the photocurable resin composition.

In the photocurable resin composition, the mass ratio of the polymeric crosslinking agent (A) to the polymeric material (B) is preferably 5:95 to 95:5, more preferably 5:95 to 60:40, particularly preferably 5:95 to 50:50. Alternatively, the mass ratio of the polymeric crosslinking agent (A) to the polymeric material (B) is preferably 2:98 to 95:5, for example 3:97 to 80:20, particularly 5:95 to 60:40, 5:95 to 30:70 or 51:49 to 80:20. By setting a ratio of the polymeric crosslinking agent (A) to the polymeric material (B) in this range, the flexibility can be imparted in curing of the photocurable resin composition, and a cured film having excellent high-temperature adhesiveness can be obtained.

In the photocurable resin composition, although the polymerizable compound (C) may or may not be present, the presence of the polymerizable compound (C) is preferred. Preferably, the ratio of the polymerizable compound (C) is 40 weight% or less, or 30 mass% or less, based on the total amount of the polymeric crosslinking agent (A), the polymeric material (B) and the polymerizable compound (C) in the photocurable resin composition. The upper limit of the amount of the polymerizable compound (C) may be 15 mass%, for example, 12 mass%, particularly 10 mass% or less, or 8 mass% or less. The lower limit of the amount of the polymerizable compound (C) may be 0.1 mass%, for example, 1 mass%, particularly 2 mass%. By setting a ratio of the polymerizable compound (C) in this range, a cured film having excellent adhesiveness can be obtained.

In the photocurable resin composition, although the photopolymerization initiator (D) may or may not be present, the presence of the photopolymerization initiator (D) is preferred. Preferably, the amount of the photopolymerization initiator (D) is 0.01 to 15 mass%, for example, 0.01 to 10 mass%, particularly 0.2 to 5 mass%, based on the photocurable resin composition.

The amount of the other components may be 0 to 15 mass%, for example, 0.01 to 10 mass%, particularly 0.2 to 5 mass%, based on the photocurable resin composition.

The photocurable resin composition may have a viscosity at 25°C of 10 Pa·s or more, for example, 100 or more, particularly 150 Pa·s or more, especially 200 Pa·s or more. The upper limit of the viscosity of the photocurable resin composition at 25°C may be 30000 Pa·s or 20000 Pa·s, for example, 1000 Pa·s.

With a viscosity in the specified range, for example, the composition can be prevented from dripping when applied to a curved substrate.

### [Application of photocurable resin composition]

The method for applying the photocurable resin composition to a substrate is not particularly limited, including, for example, a dispensing method, a coater method, and a printing method. Specific examples of the application method include a reverse gravure coating method, a direct gravure coating method, a spin coating method, a dip coating method, a spray coating method, a roll coating method, a die coating method, a bar coating method, and a curtain coating method.

The material of the substrate may be an organic material or an inorganic material. Examples of the organic material include a thermoplastic resin such as an acrylic resin, a polycarbonate resin, a polyester resin, a styrene resin, an acrylic-styrene copolymer resin, a cellulose resin, and a polyolefin resin; and a thermosetting resin such as a phenol resin, a urea resin, a melamine resin, an epoxy resin, an unsaturated polyester, a silicone resin, and a urethane resin. Examples of the inorganic material include ceramics; glass; and metal (single metal or alloy) such as silicon, copper, zinc and aluminum.

### (Cured product)

The photocurable resin composition of the present invention may be cured by irradiating energy rays such as UV rays to make a cured product. Specifically, the photocurable resin composition of the present invention, for example, may be cured by irradiating predetermined UV rays with a UV ray irradiation device such as a xenon lamp, a xenon-mercury lamp, a metal halide lamp, a highpressure mercury lamp, a low-pressure mercury lamp, and a UV-LED lamp.

The integrated amount of UV rays irradiated during curing of the photocurable resin composition of the present invention is preferably 0.05 J/cm² to 10 J/cm², more preferably 0.1 J/cm² to 5 J/cm².

The Haze value of the cured product of the photocurable resin composition (thickness: 0.3 mm) may be 2% or less, for example, 1% or less, particularly 0.5% or less. The lower limit of the Haze value may be 0.001% or 0.01%.

### (Adhesive)

The adhesive (pressure-sensitive adhesive and adhesive) of the present invention comprises the photocurable resin composition.

Incidentally, in the present specification, a "adhesive" includes both of a pressure-sensitive adhesive and an adhesive.

The photocurable resin composition of the present invention before irradiation with energy rays is viscous, so that a pressure-sensitive adhesive can be made therefrom. Also, as described above, the photocurable resin composition of the present invention is cured by irradiating energy rays, so that an adhesive can be made therefrom.

The adhesive of the present invention may comprise other components in addition to the photocurable resin composition of the present invention.

### (Laminate)

The present invention relates to a laminate having a layer comprising an adhesive and a layer composed of a glass substrate or a plastic substrate.

The adhesive of the present invention is applied to, for example, a plastic substrate, a flexible printed circuit substrate, a glass substrate, or a substrate having, for example, a thin film of indium tin oxide (ITO) formed on any of these substrates, and cured through irradiation with energy rays such as UV rays, depending on the circumstances, so that a laminate of an adhesive and a substrate can be made.

Examples of the plastic substrate for preferred use include a substrate made of acrylic resin, PC (polycarbonate), PBT (polybutylene terephthalate), PPS (polyphenylene sulfide), modified PPE (polyphenylene ether), PET (polyethylene terephthalate), COP (cycloolefin polymer), or TAC (triacetate cellulose).

Although the substrate may or may not be transparent, a transparent substrate is preferred.

The substrate may be, for example, an antireflection film, an antifouling film, and a transparent conductive film constituting a touch panel.

The laminate may have a two-layer structure of adhesive layer/substrate layer, or a three-layer structure of first substrate layer/adhesive layer/second substrate layer.

The thickness of the adhesive layer may be 0.1 µm to 5 mm, for example, 1 µm to 1 mm, particularly 10 µm to 300 µm.

### Examples

Although the present invention is further described in detail based on specific Examples as follows, the present invention is not limited to the following Examples, and may be practiced with appropriate modification without change of the gist thereof.

Tests were performed as follows.

### [Measurement of number-average molecular weight (Mn) and weight-average molecular weight (Mw)]

In Table 1, the molecular weight of the urethane acrylate and the urethane resin obtained is shown. The average molecular weight is a value in terms of polystyrene by gel permeation chromatography (GPC) under the following measurement conditions:
Measurement instrument (HLC-8220GPC (product name), manufactured by Tosoh Corporation), column (Shodex KF-G + KF-805L × 2 + KF-800D), Developing solvent (tetrahydrofuran (THF)).

### [Viscosity measurement]

The viscosity of the resin composition before curing was measured at 25°C at a shearing rate in the range of 0.01 to 1000 with a rheometer (rheometer DHR-2 manufactured by TA Instruments), and the value at a shearing rate of 1.0 was determined as the viscosity.

### [Optical properties]

### (Preparation method of sample for measurement of optical properties)

On an end of a glass substrate, a silicone sheet having a thickness of 0.3 mm was placed as a spacer. On the glass substrate, a photocurable resin composition obtained in each of Examples or Comparative Examples was placed, and another glass substrate was further placed thereon, so that a laminate including a photocurable resin composition layer sandwiched between two sheets of the glass substrates was made. The laminate was exposed to UV rays at an integrated light intensity of 5 J/cm² with a UV irradiation device (UV-15201BY-A, manufactured by Ushio Inc., light source: UVL-1500M2-N1), so that a sample for measurement of optical properties was obtained.

### (Haze measurement)

The haze (%) of the sample for measurement of optical properties was measured in accordance with K 7361-1:1997 with a turbidity meter (NDH5000 manufactured by Nippon Denshoku Industries Co., Ltd.).

### (Adhesive strength)

### (Preparation method of sample for testing adhesiveness)

The photocurable resin composition obtained in each of Examples and Comparative Examples was applied on a glass substrate to have a thickness of 50 µm and a width of 25 mm, and then various types of resin film (polycarbonate film (PC), triacetyl cellulose film (TAC), and polyethylene terephthalate film (PET)) was laminated on the coating layer. UV rays were irradiated from the glass substrate side to achieve an integrated optical intensity of 5 J/cm² with a UV irradiation device (UV-15201BY-A, manufactured by Ushio Inc., light source: UVL-1500M2-N1), so that a sample for testing adhesiveness was obtained.

### (Adhesiveness test)

The sample for testing adhesiveness was subjected to measurement of the 90-degree peel strength at a rate of 200 mm/min under an atmosphere at 23°C and a humidity of 50%, which was determined as the adhesive strength.

### [High-temperature adhesiveness]

### (Preparation method of sample for testing a high-temperature adhesiveness)

On an end of a glass substrate having a thickness of 1 mm, a silicone sheet having a thickness of 0.3 mm was used as a spacer. On the glass substrate, a photocurable resin composition obtained in each of Examples and Comparative Examples was placed, and a polycarbonate substrate having a thickness of 2 mm was further placed thereon for filling with the resin. The laminate was then exposed to UV rays from the glass plate side to achieve an integrated optical intensity of 5 J/cm² with a UV irradiation device (UV-15201BY-A, manufactured by Ushio Inc., light source: UVL-1500M2-N1), so that a sample for testing high-temperature adhesiveness was obtained.

### (High-temperature adhesiveness test)

The sample for testing high-temperature adhesiveness was left standing still overnight, and then left standing in an oven at 95°C for 1 hour so as to visually confirm the presence of peeling and warpage of the substrate, and the presence of cloudiness and foaming for evaluation.
Good: State with none of peeling, warpage, cloudiness and foaming.
Poor: State with any of peeling, warpage, cloudiness and foaming observed.

### Synthesis Example 1: Synthesis of urethane (meth)acrylate (UA-1)

A reaction apparatus provided with a stirrer and a heater was charged with 214.3 g (0.240 mol) of polycarbonate diol (trade name: UM-90 (1/3) manufactured by Ube Industries, Ltd., hydroxyl value: 125.5 mg KOH/g, polycarbonate diol including 1,6-hexane diol and cyclohexane dimethanol as polyol components), and 0.09 g of dibutyl hydroxy toluene (BHT), while introducing nitrogen. Stirring was then performed at 60°C. Next, 70.3 g (0.316 mol) of isophorone diisocyanate (IPDI) was added, and the mixture was stirred for 30 minutes. Then, 0.03 g of dibutyltin dilaurate was added as a catalyst, and stirred at 80°C for 1 hour. Next, air was introduced to make an air atmosphere. Then, 16.6 g (0.143 mol) of 2-hydroxyethyl acrylate (HEA) was added and reacted for 2 hours to produce a urethane (meth)acrylate (UA-1) (Mn: 7000, Mw: 14000).

### Synthesis Example 2: Synthesis of urethane (meth)acrylate (UA-2)

In a reaction apparatus provided with a stirrer and a heater, 127.2 g (0.142 mol) of polycarbonate diol (trade name: UM-90 (1/3) manufactured by Ube Industries, Ltd., hydroxyl value: 125.5 mg KOH/g, polycarbonate diol including 1,6-hexane diol and cyclohexane dimethanol as polyol components), 0.06 g of dibutyl hydroxy toluene (BHT), and 0.04 g of dibutyltin dilaurate as a catalyst were stirred at 60°C while introducing nitrogen. Next, 51.6 g (0.232 mol) of isophorone diisocyanate (IPDI) was added, and the mixture was stirred at 80°C for 1 hour. Next, air was introduced to make an air atmosphere. Then, 20.0 g (0.181 mol) of 2-hydroxyethyl acrylate (HEA) was added and reacted for 2 hours to produce a urethane (meth)acrylate (UA-2) (Mn: 3800, Mw: 7200).

### Synthesis Example 3: Synthesis of urethane (meth)acrylate (UA-3)

A reaction apparatus provided with a stirrer and a heater was charged with 213.3 g (0.202 mol) of polycarbonate diol (trade name: PH-100 manufactured by Ube Industries, Ltd., hydroxyl value: 111.1 mg KOH/g, polycarbonate diol including 1,5-pentane diol and 1,6-hexane diol as polyol components), and 0.09 g of dibutyl hydroxy toluene (BHT), while introducing nitrogen. Stirring was then performed at 60°C. Next, 61.7 g (0.277 mol) of isophorone diisocyanate (IPDI) was added, and the mixture was stirred for 30 minutes. Then, 0.06 g of dibutyltin dilaurate was added as a catalyst, and stirred at 80°C for 1 hour. Next, air was introduced to make an air atmosphere. Then, 17.1 g (0.147 mol) of 2-hydroxyethyl acrylate (HEA) was added to react for 2 hours to produce a urethane (meth)acrylate (UA-3) (Mn: 5900, Mw: 12000).

### Synthesis Example 4: Synthesis of urethane (meth)acrylate (UA-4)

In a reaction apparatus provided with a stirrer and a heater, 140.3 g (0.157 mol) of polycarbonate diol (trade name: UM-90 (1/3) manufactured by Ube Industries, Ltd., hydroxyl value: 125.5 mg KOH/g, polycarbonate diol including 1,6-hexane diol and cyclohexane dimethanol as polyol components), 0.07 g of dibutyl hydroxy toluene (BHT), and 0.04 g of dibutyltin dilaurate as a catalyst were stirred at 60°C while introducing nitrogen. Next, 63.3 g (0.285 mol) of isophorone diisocyanate (IPDI) was added, and the mixture was stirred at 80°C for 1 hour. Next, air was introduced to make an air atmosphere. Then, 29.8 g (0.257 mol) of 2-hydroxyethyl acrylate (HEA) was added to react for 2 hours to produce a urethane (meth)acrylate (UA-4) (Mn: 3000, Mw: 5700).

### Synthesis Example 5: Synthesis of urethane acrylate (UA-5)

A reaction apparatus provided with a stirrer and a heater was charged with 161.46 g (0.181 mol) of polycarbonate diol (trade name: UM-90 (1/3) manufactured by Ube Industries, Ltd., hydroxyl value: 125.5 mg KOH/g, polycarbonate diol including 1,6-hexane diol and cyclohexane dimethanol as polyol components), 0.07 g of dibutyl hydroxy toluene (BHT), and 0.04 g of dibutyltin dilaurate, while introducing nitrogen. Stirring was then performed at 60°C. Next, 53.1 g (0.239 mol) of isophorone diisocyanate (IPDI) was added, and the mixture was stirred at 80°C for 30 minutes. Next, air was introduced to make an air atmosphere. Then, 6.56 g (0.056 mol) of 2-hydroxyethyl acrylate (HEA) was added, and stirred for 1 hour. Further, 5.73 g (0.055 mol) of neopentyl glycol was added and reacted to produce a urethane acrylate (UA-5) (Mn: 4800, Mw: 9300).

### Synthesis Example 6: Synthesis of urethane acrylate (UA-6)

A reaction apparatus provided with a stirrer and a heater was charged with 154.0 g (0.176 mol) of polycarbonate diol (trade name: UM-90 (1/3) manufactured by Ube Industries, Ltd., hydroxyl value: 128.5 mg KOH/g, polycarbonate diol including 1,6-hexane diol and cyclohexane dimethanol as polyol components), 8.77 g (0.0082 mol) of polypropylene glycol (manufactured by FUJIMILM Wako Pure Chemical Corporation, hydroxyl value: 104 mg KOH/g), 0.07 g of dibutyl hydroxy toluene (BHT), and 0.02 g of dibutyltin dilaurate, while introducing nitrogen. Stirring was then performed at 60°C. Next, 54.4 g (0.245 mol) of isophorone diisocyanate (IPDI) was added, and the mixture was stirred at 80°C for 30 minutes. Next, air was introduced to make an air atmosphere. Then, 13.0 g (0.11 mol) of 2-hydroxyethyl acrylate (HEA) was added, and stirred for 4 hour to produce a urethane acrylate (UA-6) (Mn: 5800, Mw: 11000).

### Synthesis Example 7: Synthesis of polyurethane resin (PU-1)

To a reaction apparatus provided with a stirrer and a heater, 886.9 g (0.992 mol) of polycarbonate diol (trade name: UM-90 (1/3) manufactured by Ube Industries, Ltd., hydroxyl value: 125.5 mg KOH/g, polycarbonate diol including 1,6-hexane diol and cyclohexane dimethanol as polyol components) was added and stirred at 60°C. Next, 134.9 g (0.607 mol) of isophorone diisocyanate (IPDI) was added, and the mixture was stirred for 1 hour. Next, 0.1 g of dibutyltin laurate was added as a catalyst, and stirred at 80°C for 3 hour to produce a polyurethane resin (PU-1) (Mn: 4900, Mw: 10000).

### Synthesis Example 8: Synthesis of polyurethane resin (PU-2)

To a reaction apparatus provided with a stirrer and a heater, 368.7 g (0.412 mol) of polycarbonate diol (trade name: UM-90 (1/3) manufactured by Ube Industries, Ltd., hydroxyl value: 125.5 mg KOH/g, polycarbonate diol including 1,6-hexane diol and cyclohexane dimethanol as polyol components) was added and stirred at 60°C. Next, 65.2 g (0.293 mol) of isophorone diisocyanate (IPDI) was added, and the mixture was stirred for 1 hour. Next, 0.04 g of dibutyltin laurate was added as a catalyst, and stirred at 80°C for 2 hours to produce a polyurethane resin (PU-2) (Mn: 6200, Mw: 12000).

### Synthesis Example 9: Synthesis of polyurethane resin (PU-3)

To a reaction apparatus provided with a stirrer and a heater, 127.2 g (0.142 mol) of polycarbonate diol (trade name: UM-90 (1/3) manufactured by Ube Industries, Ltd., hydroxyl value: 125.5 mg KOH/g, polycarbonate diol including 1,6-hexane diol and cyclohexane dimethanol as polyol components) and 0.04 g of dibutyltin laurate as a catalyst were added and stirred at 60°C. Next, 51.6 g (0.232 mol) of isophorone diisocyanate (IPDI) was added, and the mixture was stirred at 80°C for 2 hours to produce a polyurethane resin (PU-3) (Mn: 4400, Mw: 8300).

### Synthesis Example 10: Synthesis of polyurethane resin (PU-4)

To a reaction apparatus provided with a stirrer and a heater, 604 g (0.676 mol) of polycarbonate diol (trade name: UM-90 (1/3) manufactured by Ube Industries, Ltd., hydroxyl value: 125.5 mg KOH/g, polycarbonate diol including 1,6-hexane diol and cyclohexane dimethanol as polyol components) and 0.05 g of dibutyltin laurate as a catalyst were added and the mixture was stirred at 60°C. Next, 112 g (0.502 mol) of isophorone diisocyanate (IPDI) was added, and the mixture was stirred at 80°C for 2 hours to produce a polyurethane resin (PU-4) (Mn: 6300, Mw: 12700).

### Synthesis Example 11: Synthesis of polyurethane resin (PU-5)

To a reaction apparatus provided with a stirrer and a heater, 300 g (0.335 mol) of polycarbonate diol (trade name: UM-90 (1/3) manufactured by Ube Industries, Ltd., hydroxyl value: 125.5 mg KOH/g, polycarbonate diol including 1,6-hexane diol and cyclohexane dimethanol as polyol components) and 0.04 g of dibutyltin laurate as a catalyst were added and the mixture was stirred at 60°C. Next, 56.4 g (0.254 mol) of isophorone diisocyanate (IPDI) was added, and the mixture was stirred at 80°C for 2 hours to produce a polyurethane resin (PU-5) (Mn: 7250, Mw: 14400).

### Synthesis Example 12: Synthesis of polyurethane resin (PU-6)

To a reaction apparatus provided with a stirrer and a heater, 396.0 g (0.453 mol) of polycarbonate diol (trade name: UM-90 (1/3) manufactured by Ube Industries, Ltd., hydroxyl value: 128.5 mg KOH/g, polycarbonate diol including 1,6-hexane diol and cyclohexane dimethanol as polyol components), 20.7 g (0.019 mol) of polypropylene glycol (manufactured by FUJIFILM Wako Pure Chemical Corporation, hydroxyl value: 104 mg KOH/g) were added, and the mixture was stirred at 60°C. Next, 79.7 g (0.359 mol) of isophorone diisocyanate (IPDI) was added, and the mixture was stirred at 60°C for 10 minutes. Then, 0.05 g of dibutyltin laurate was added, and the mixture was stirred at 80°C for 3 hours to produce a polyurethane resin (PU-6) (Mn: 7700, Mw: 17000).

### Synthesis Example 13: Synthesis of polyurethane resin (PU-7)

To a reaction apparatus provided with a stirrer and a heater, 201 g (0.103 mol) of polypropylene glycol (manufactured by FUJIFILM Wako Pure Chemical Corporation, hydroxyl value: 55 mg KOH/g) was added and stirred at 60°C. Next, 17.8 g (0.0802 mol) of isophorone diisocyanate (IPDI) was added, and the mixture was stirred at 60°C for 10 minutes. Then, 0.04 g of dibutyltin laurate was added as a catalyst, and the mixture was stirred at 80°C for 6 hours to produce a polyurethane resin (PU-7) (Mn: 14000, Mw: 28500).

### Examples 1 to 9, and Comparative Examples 1 to 2

A polymeric crosslinking agent (A), a polymeric material (B), a polymerizable compound (C), a photopolymerization initiator (D), and other components of the types shown in Table 1 were weighed as shown in Table 1 (parts by mass), and stirred and mixed to achieve homogeneity. The mixture was then filtered with a syringe filter having a pore size of 1.0 µm, so that a photocurable resin composition was obtained. The photocurable resin composition was subjected to tests. The results are shown in Table 1.

**[Table 1]**

| | | | Ex. 1 | Ex. 2 | Ex. 3 | Ex. 4 | Ex. 5 | Ex. 6 | Ex. 7 | Ex. 8 | Ex. 9 | Com. Ex. 1 | Com. Ex. 2 |
|---|---|---|---|---|---|---|---|---|---|---|---|---|---|
| Polymeric crosslinking agent (A) | Urethane (meth) acrylate | UA-1 | 10 | | | | | | 5 | | 5 | | 10 |
| | | UA-2 | | 5 | | 5 | | | | | | | |
| | | UA-3 | | | 5 | | | | | | | | |
| | | UA-4 | | | | | 55 | | | | | | |
| | | UA-5 | | | | | | 8 | | | | | |
| | | UA-6 | | | | | | | | 5 | | | |
| | Acrylic-modified polyisoprene | UC-203 | | | | | | | | | | 22 | |
| Polymeric material (B) | Polycarbonate polyol-based polyurethane resin | PU-1 | 85 | | | 90 | | | | | | | |
| | | PU-2 | | 90 | 90 | | | | | | | | |
| | | PU-3 | | | | | 40 | | | | | | |
| | | PU-4 | | | | | | | 90 | 90 | | | |
| | | PU-5 | | | | | | 65 | | | | | |
| | | PU-6 | | | | | | | | | 90 | | |
| | Polyether polyol-based polyurethane resin | PU-7 | | | | | | | | | | | 85 |
| | Terpene-based hydrogenated resin | Clearon P85 | | | | | | | | | | 25 | |
| | Liquid polybutadiene polymer | Polyvest P110 | | | | | | | | | | 33 | |
| Polymerizable compound (C) | 4-HBA | | 5 | 5 | 5 | | 5 | 26 | 5 | 5 | 5 | | 5 |
| | FA-512 | | | | | 5 | | | | | | 16 | |
| | 2-HBMA | | | | | | | | | | | 4 | |
| | TBCHA | | | | | | | 1 | | | | | |
| Photopolymeriza tion initiator (D) | IRGACURE184 | | 2 | 2 | 2 | 2 | 2 | 2 | 2 | | | 2.4 | 2 |
| | Lucirin TPO | | 1 | 1 | 1 | 1 | 1 | 1 | 1 | | | 0.6 | 1 |
| Viscosity (Pa·s) | 25°C | | 2700 | 9500 | 7400 | 7800 | 2400 | 170 | 8100 | 21000 | 19000 | 5 | 80 |
| Transparency | Haze (%) | | 0.2 | 0.2 | 0.2 | 0.2 | 0.2 | 0.2 | 0.2 | 0.2 | 0.2 | | 85 |
| Adhesive strength N/25 mm | PC/glass | | 35 | 30 | 23 | 25 | 7 | - | - | - | - | - | - |
| | TAC/glass | | 17 | 22 | 17 | 20 | 5.5 | - | - | - | - | 2.2 | - |
| | PET/glass | | 30 | 28 | 25 | 28 | 6 | - | - | - | - | - | - |
| High-temperature adhesiveness (PC/alass) | Left standing at 95°C for 1 hour | | Good | Good | Good | Good | Good | Good | Good | Good | Good | Poor | Poor |

| | | | | | | | | | | | | | |
|---|---|---|---|---|---|---|---|---|---|---|---|---|---|
| -: Not measured | | | | | | | | | | | | | |

Incidentally, the abbreviations in Table 1 are as follows.

### (Polymeric crosslinking agent (A))

UC-203: an acrylic modified polyisoprene of a maleic anhydride adduct of polyisoprene polymer and 2-hydroxyethyl methacrylate (manufactured by Kuraray Co., Ltd.) (a compound except for urethane (meth)acrylate)

### (Polymeric material (B))

Clearon P-85: hydrogenated terpene resin (manufactured by Yasuhara Chemical Co., Ltd.) (a compound except for polyurethane resin)
Polyvest P110: liquid polybutadiene polymer (manufactured by Evonik) (a compound except for polyurethane resin)

### (Polymerizable compound (C))

4-HBA: 4-hydroxybutyl acrylate (manufactured by Tokyo Chemical Industry Co., Ltd.)
FA-512M: dicyclopentenyl oxyethyl methacrylate (trade name: FA-512M, manufactured by Hitachi Chemical Co., Ltd.)
2-HBMA: 2-hydroxybutyl methacrylate (trade name: Light Ester HOB (N), manufactured by Kyoeisha Chemical Co., Ltd.)
TBCHA: 4-t-butylcyclohexyl acrylate

### (Photopolymerization initiator (D))

IRGACURE 184: a photopolymerization initiator, 1-hydroxy-cyclohexyl phenyl ketone, manufactured by BASF
Lucirin TPO: a photopolymerization initiator, diphenyl(2,4,6-trimethoxybenzoyl)phosphine oxide, manufactured by BASF

The results shown in Table 1 reveals that the photocurable resin composition of the present invention is excellent in adhesiveness between a resin and glass exposed to high temperature (high-temperature adhesiveness). Also, having high viscosity, the photocurable resin composition can be prevented from dripping when applied to a curved substrate.

Other aspects of the present invention are as follows.
<1> A photocurable resin composition comprising a polymeric crosslinking agent (A), a polymeric material (B), and a polymerizable compound (C), wherein
   the polymeric crosslinking agent (A) is a polyurethane (meth)acrylate comprising a structure derived from a polycarbonate polyol, and having a (meth)acrylic group at an end.
<2> The photocurable resin composition according to item <1>, wherein the structure derived from a polycarbonate polyol has at least one repeating unit selected from the group consisting of a repeating unit represented by the following formula (1A) and a repeating unit represented by the following formula (1B):

   **HO-Z¹-OH** **(1A)**

   **HO-Z²-OH** **(1B)**

   wherein Z¹ represents a divalent straight-chain aliphatic hydrocarbon group having 2 to 20 carbon atoms, and
   Z² represents a divalent cyclic aliphatic hydrocarbon group, having 6 to 18 carbon atoms.
<3> The photocurable resin composition according to item <1> or <2>, wherein the polymeric material (B) comprises a polyurethane resin comprising a structure derived from a polycarbonate polyol.
<4> The photocurable resin composition according to any one of items <1> to <3>, wherein a mass ratio of the polymeric crosslinking agent (A) to the polymeric material (B) is (A):(B) = 5:95 to 95:5.
<5> The photocurable resin composition according to any one of items <1> to <4>, wherein the polymeric crosslinking agent (A) has a weight-average molecular weight of 5000 to 20000.
<6> The photocurable resin composition according to any one of items <1> to <5>, wherein the polymeric material (B) has a weight-average molecular weight of 6000 to 20000.
<7> The photocurable resin composition according to any one of items <1> to <6>, wherein a content of the polymerizable compound (C) is 15 mass% or less, based on the total amount of the polymeric crosslinking agent (A), the polymeric material (B), and the polymerizable compound (C).
<8> A cured product produced by curing the photocurable resin composition according to any one of items <1> to <7>.
<9> An adhesive comprising the photocurable resin composition according to any one of items <1> to <7>.
<10> A laminate having a layer comprising the adhesive according to item <9>, and a layer composed of a glass substrate or a plastic substrate.

### Industrial Applicability

The present invention relates to a novel photocurable resin composition and an adhesive comprising the same. The photocurable resin composition is useful for coating agents, and particularly useful as a main component of various coating agents to be cured with active energy rays.

## Claims

1. A photocurable resin composition comprising a polymeric crosslinking agent (A) and a polymeric material (B), wherein
the polymeric crosslinking agent (A) comprises a urethane (meth)acrylate, and
the polymeric material (B) comprises a polyurethane resin comprising a structure derived from a polycarbonate polyol, and having no acrylic group.

2. The photocurable resin composition according to claim 1, wherein the urethane (meth)acrylate in the polymeric crosslinking agent (A) has a structure derived from a polycarbonate polyol.

3. The photocurable resin composition according to claim 1 or 2, wherein a mass ratio of the polymeric crosslinking agent (A) to the polymeric material (B) is (A):(B) = 5:95 to 95:5.

4. The photocurable resin composition according to any one of claims 1 to 3, wherein the urethane (meth)acrylate in the polymeric crosslinking agent (A) has a weight-average molecular weight of 5000 to 20000.

5. The photocurable resin composition according to any one of claims 1 to 4, wherein the polyurethane resin in the polymeric material (B) has a weight-average molecular weight of 6000 to 20000.

6. The photocurable resin composition according to any one of claims 1 to 5, further comprising a polymerizable compound (C) other than the polymeric crosslinking agent (A) .

7. The photocurable resin composition according to any one of claims 1 to 6, which has a viscosity of 150 Pa·s or more at 25°C.

8. A cured product produced by curing the photocurable resin composition according to any one of claims 1 to 7.

9. An adhesive comprising the photocurable resin composition according to any one of claims 1 to 7.

10. A laminate having a layer comprising the adhesive according to claim 9, and a layer composed of a glass substrate or a plastic substrate.
